# EUROPÄISCHE PATENTANMELDUNG

(11) **EP 1 199 706 A2**
(43) Veröffentlichungstag der Anmeldung: **24.04.2002**
(21) Anmeldenummer: 01123831.8
(22) Anmeldetag: 05.10.2001
(51) Int. Cl.: G10L 15/18

(54) **Verfahren zur eindeutigen Analyse eines Sprachbefehls**

(30) Priorität: 18.10.2000 DE 10051794
(71) Anmelder: Saymore Speech Operated Systems GmbH, 90411 Nürnberg (DE)
(72) Erfinder: Mohr, Andreas, 91096 Möhrendorf (DE); Sailer, Jörg, 91459 Markt Erlbach (DE)
(74) Vertreter: Pröll, Jürgen, Dipl.-Ing. (FH)

(57) **Zusammenfassung**

Die Erfindung beschreibt ein Verfahren zur Steuerung eines Systems durch eine Spracheingabe mit Zuweisung eindeutiger Ereignisse welche von einem System ausführbar sind. Das Verfahren besteht aus folgenden Schritten:
- Eingabe der Sprache,
- Durchführung einer Spracherkennung insbesondere nach dem " Bigramm- und Trigramm-Verfahren ", und durchführen einer Transkription der eingegebenen Sprache,
- Durchführung einer Logikanalyse der transkribierten Spracheingabe, wobei jedes der transkribierten Wortteile der Spracheingabe mit abgespeicherten Mustern verglichen wird,
- Zuweisung eines eindeutigen Ereignisses als Ereignis der Logikanalyse,
- Veranlassung des Systems das eindeutig bestimmte Ereignis auszuführen.

## Beschreibung

Die Erfindung betrifft ein Verfahren zur Steuerung eines Systems durch eine Spracheingabe, ein Verfahren zur Logikanalyse einer gesprochenen Wortfolge und ein System zur Durchführung der Verfahren gemäß den Merkmalen der Ansprüche 1, 7 und 12.

Es sind verschiedene handelsübliche Spracherkennungssysteme zur Erkennung von gesprochener Sprache und Umsetzung im Text, so genannte "Speech-To-Text-Systeme", bekannt.

Hierbei wird zumeist die so genannte "Bigramm- oder Trigramm-Technologie" verwendet, um aus der gesprochenen Sprache Worte zu erkennen.

Aus EP-A-0 800 158 ist ein Verfahren zur Zuordnung von Schlüsselwörtern in akustischen Daten bekannt. Zur Suche eines Schlüsselwortes werden die Vokale in den akustischen Daten analysiert und mit gleichlautenden Vokalen und einem Ereignishorizont verglichen. Bei der Schlüsselwortanalyse wird dann anhand dieser Ereignisse versucht das Schlüsselwort in den akustischen Daten aufzufinden und zuzuweisen. Hierbei wird jedes einzelne Wort verglichen. Ein logischer Zusammenhang der akustischen Daten wird nicht berücksichtigt.

Aus EP-A-0 398 574 ist ein Verfahren zur Analyse einzelner Wörter und Erkennung dieser anhand eines Vokabulars bekannt. Hierbei wird jedes einzelne Wort analysiert, einer Sprachanalyse zugeführt und anschließend, einem Wort aus einem " Wörterbuch " zugewiesen, welches die größte Wahrscheinlichkeit einer Übereinstimmung aufweist.

Aus DE 196 15 437 C1 ist ein Verfahren und eine Einrichtung zur Programmierung eines Videorekorders bekannt. Bei diesem Verfahren wird die Programmierinformation auf der Grundlage eines externen Sprachsignals und einer internen Datenbasis generiert. Bei den Steuersignalen handelt es sich um natürliche, spontan gesprochene Sprachsignale, die von einem kontinuierlichen Spracherkenner und einem damit zusammenwirkenden Parser aufgenommen, analysiert, extrahiert und in Caseframes kategorisiert werden. Die Internetdatenbasis wird hierbei dynamisch festgelegt, wobei eine Dialogführung zur Auflösung von Widersprüchen und für Modifikationsvorschläge vorgesehen ist. Die dynamische Festlegung der Datenbasis erfolgt durch die dynamische Aktualisierung des Fernsehprogramms.

Aus DE 37 230 78 A1 ist ein Verfahren zur Erkennung von zusammenhängend gesprochenen Wörtern bekannt. Hierbei wird die natürliche Grammatik in einem gewissen Umfang berücksichtigt, die in Form einer Liste vorgegeben ist. Diese Liste enthält eine Zuordnung einer syntaktischen Kategorie zu mehreren anderen Wörtern. Hierdurch kann während des Erkennungsvorgangs die Anzahl der Wörter, die jeweils gleichzeitig behandelt werden, und die in einer zweiten Liste gespeichert sind, reduziert werden. In einer dritten Liste werden Angaben über Hypothesen für den zu erkennenden Satz gesammelt. Mit fortschreitendem Vergleich des Sprachsignals mit den aktuellen Wörtern und dem Ergebnis davon, welche durch die Hypothesen teilweise verifiziert werden, werden für das weitere Sprachsignal mögliche Hypothesen ermittelt.

Aus DE-A-196 22 602 ist ein Textverarbeitungssystem auf einem Rechner bekannt, wobei die Eingabe von Befehlen entweder interaktiv sprachgeführt und/oder über die Tastatur erfolgt. Im weiteren ist ein Mikrofon und ein Spracherkennungs- beziehungsweise Sprachverarbeitungssystem vorgesehen, um eine digitale Sprachaufzeichnung und/oder Eingabe zu ermöglichen. Der gesprochenen Texte wird analysiert und dem Textverarbeitungssystem zugeführt.

Aus keinem der bekannten Verfahren und/oder Systeme ist es bekannt, ein Gerät zu steuern, ohne dass sich ein Nutzer an die Befehlsvorgaben des Gerätes halten muss. Dies hat zur Folge, dass mit natürlich gesprochener Sprache eine Sprachsteuerung nicht möglich ist. Ein Nutzer muss die Befehle, welche das zu steuernde System "erkennt" kennen und sich an die gerätespezifische Vorgehensweise anpassen. Der Nutzer muss seine Sprache dem Gerät unterordnen.

Aufgabe der Erfindung ist es, ein Verfahren zur Sprachsteuerung anzugeben, welches mit natürlich gesprochener Sprache erfolgt, ohne dass spezielle Steuerwörter verwendet werden müssen, ein Verfahren zur Logikanalyse einer Spracheingabe mit eindeutiger Zuweisung eines Ereignisses eines zu steuernden Systems, sowie ein System zur Durchführung der Verfahren.

Diese Aufgabe wird durch die Merkmale der Ansprüche 1, 7 und 12 gelöst.

Zur Umsetzung des Verfahrens zur Sprachsteuerung und des Verfahrens zur Logikanalyse einer Spracheingabe ist es notwendig, dass eine Spracheingabe erfolgt. Hierfür ist eine Spracheingabeeinheit vorgesehen. Über diese Spracheingabeeinheit gibt ein Nutzer seine Anweisungen an das zu steuernde Gerät. Das Gerät wandelt diese Anweisungen in digitale Sprachsignale und speichert diese zwischen. Anschließend erfolgt eine Analyse der gesprochenen Anweisung. Die gespeicherte Anweisung wird hierzu transkribiert, damit eine Weiterverarbeitung vorgenommen werden kann. Anschließend erfolgt eine logische Analyse der transkribierten Anweisung. Hierbei wird ein Vergleich von Wortgruppen mit Anweisungen durchgeführt.
Um eine eindeutige Zuweisung zu ermöglichen, werden jedem Befehl mindestens zwei Gruppen von Mustern zugeordnet. Die Gruppen sind Sammlungen von Begriffen, welche Synonyme bzw. zueinander redundante Begriffe bzw. logisch zueinander gehörig sind. Im Weiteren erfolgt eine Aufteilung der transkribierten Anweisung nach Substantiven und Verben. Diese Aufteilung liegt die Erkenntnis zu Grunde, dass bei einer Sprachsteuerung mit natürlicher Sprache einer Anweisung in der Eingabeform als Satz, mindestens ein Substantiv und ein Verb enthält. Das Substantiv und das Verb beschreiben die Funktion, welche erkannt und ausgeführt werden soll zumeist eindeutig. Daher werden jedem Befehl des Gerätes jeweils eine Gruppe von Substantiven, so genannte Hauptgruppen, und Verben, sogenannte Untergruppen, zugeordnet. Die Mächtigkeit der Erkennung und eindeutigen Zuordnung der Sprachsteuerung ist direkt proportional zum Umfang der zugeordneten Gruppen zu den jeweiligen Befehlen und der Eindeutigkeit der Zuordnung der Substantive und Verben zu den Befehlen. Um eine Eindeutigkeit zu haben, darf eine Kombination von einem Substantiv und einen Verb nur ein einziges mal eindeutig möglich sein, andernfalls wäre eine eindeutige Zuweisung nicht möglich.
Für jeden auszuführenden Befehl ist folglich eindeutig eine Kombination aus einer Hauptgruppe und der einem Befehl zugehörigen Untergruppe bzw. der Untergruppen zuweisbar.
In der natürlichen Kommunikation verwendet aber ein Anwender nicht nur die Schlüsselwort eines Kommandos, sondern kommuniziert frei in vollen Sätzen, Wortgruppen oder Einzelwörtern. Bei der Analyse werden nur die zur Ausführung des Kommandos relevanten Wörter ausgewertet. Die im Satz vorhandenen "irrelevanten" Worte bzw. Muster oder Satzteile werden ignoriert. Aufgrund der nunmehr vorliegenden Analyse werden die Substantive, Verben und Präfixe bzw. Präpositionen, welche einen Befehl eindeutig bestimmen, in sogenannte Untergruppen zusammengefasst und gespeichert.

Nachdem ein gesprochener Befehl eingegeben ist, erfolgt eine Umsetzung der Lautfolge bzw. Muster in für den Computer verständliche, digitale Werte. Anschließend wird eine Transkription durchgeführt. Dies bedeutet, dass die eingegebenen Sprachmuster bzw. Worte des Nutzers über die bekannte Bigramm- oder Trigramm-Technologie erkannt und zugewiesen werden. Nach der Transkription liegt nunmehr eine Wortfolge als Folge von "transkribierten" Mustern bzw. Wörtern vor. Es werden anschließend die Worte bzw. Muster aus den Hauptgruppen, eins nach dem anderen, mit der Wortfolge verglichen.

Wird ein Wort einer Hauptgruppe eindeutig zugewiesen, wird der zugehörige Befehl und die Hauptgruppe markiert. Anschließend werden die Worte der Untergruppen, eines nach dem anderen, mit der verbleibenden Wortfolge verglichen. Wird nunmehr eine weitere Übereinstimmung mit einem Wort einer Untergruppen gefunden, so wird überprüft, ob der zugehörige Befehl bereits markiert ist und somit bereits eine Übereinstimmung gefunden wurde. Ist dies der Fall, so wird festgestellt, ob die Übereinstimmung in der bereits markieren Untergruppen erfolgt oder in einer noch nicht markieren Untergruppe. Liegt eine Übereinstimmung in einer noch nicht markierten Untergruppen zum Befehl vor, wird verglichen, ob noch weitere Untergruppen den Befehl zugeordnet sind und ob alle Untergruppen als markiert gekennzeichnet sind. Die einzelnen markierten Befehle durchlaufen nun eine definierte Hierarchieüberprüfung. Kann der Befehl eindeutig zugewiesen werden, wird eine Aktion ausgeführt. Anschließend werden sämtliche Markierung gelöscht und das System erwartet nun neue Spracheingabe.

In einer vorteilhaften Ausgestaltung der Erfindung, wird vor der Spracheingabe bzw. vor der Auswertung einer Spracheingabe der aktuelle Status des Systems überprüft. Hierdurch ist es möglich, einen auszuführenden Befehl lediglich auf Grund einer Übereinstimmung eines einzigen Musters in einer Untergruppe zu ermöglichen. Durch die Systemanalyse ist es möglich, den zweiten notwendigen Begriff, bereits systemspezifisch zuzuweisen.

In einer weiteren vorteilhaften Ausgestaltung der Erfindung weisen die Untergruppen zu den jeweiligen Befehlen mehr als zwei Untergruppen auf. Dies ist notwendig, um eine eindeutige Zuweisung auch für sprachlich komplexere Anweisungen und deren Umsetzung und Analyse zu ermöglichen.

Der weiteren Verdeutlichung der Erfindung wird diese anhand eines konkreten Ausführungsbeispiels näher beschrieben. Das Ausführungsbeispiels betrifft die Ausgestaltung einer flexiblen Steuerung eines Email-Systems. Bei dem Email-System handelt es sich um ein an sich bekanntes Email-System, wie beispielsweise Netscape oder Outlook, welche handelsüblich sind. Dieses System ist aber um die Navigation im System über Spracheingabe erweitert.

Zur Verdeutlichung sind zwei Figuren beigefügt, anhand deren das System und dessen Funktionsweise verdeutlicht ist.

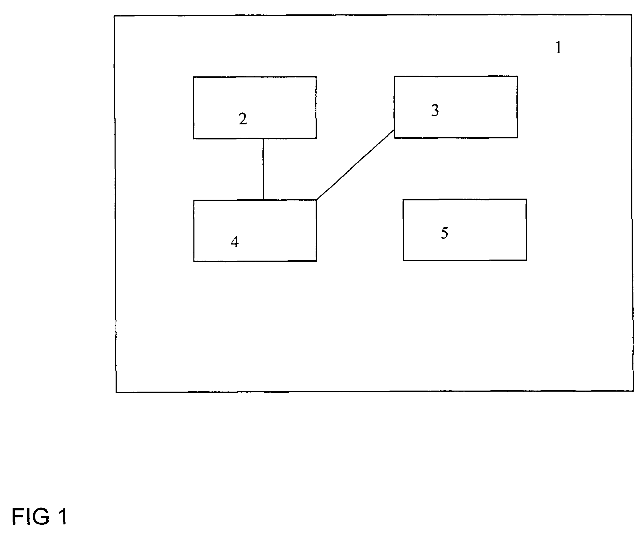

Es zeigt
- FIG 1: eine schematische Ausgestaltung der Erfindung mit den funktionswesentlichen Einheiten und
- FIG 2: eine schematische Ausgestaltung der Funktionsweise der Spracherkennung im E-Mail-Systems.

Das E-Mail-System (1) weist beispielsweise folgende Ereignisse und Befehl auf:
- neue Nachricht verfassen
- auf eine Mail antworten
- adressieren an
- Kennzeichnung

Dieser Ereignisse werden, auf nachfolgend beschriebene Weise, über eine Spracheingabe ausgeführt, d. h. das Email-System wird über die Eingabe von natürlich gesprochener Sprache, ohne dass eine Anpassung eines Nutzers an spezielle Befehlseingabestrukturen erforderlich ist, gesteuert.

Das E-Mail-System 1 weist eine Spracheingabeeinheit 2, eine Sprachanalyseeinheit 3 sowie Speichereinheit 4 und eine Funktionsausführungseinheit 5 auf. Über die Spracheingabeeinheit 2 werden die Sprachdaten des Nutzers angegeben, diese werden der Speichereinheit 4 zwischengespeichert und in der Sprachanalyseeinheit 3 analysiert und transkribiert. Die transkribierten Daten werden dann im weiteren, ausgewertet. Die Ausführungseinheit 5 ist vorgesehen, um die jeweiligen Ereignisse bzw. Befehle nach Erkennung und Zuweisung auszuführen.

Jedes der oben genannten Ereignisse des E-Mail-Systems 1 entspricht einer Ausführung von spezifischen Befehlen, welcher einem Ereignis zugeordnet sind. So führt das E-Mail-System 1 beim Ausführen des Ereignisses "Nachricht verfassen" diejenige Befehlsfolge aus, welche das E-Mail-System 1 veranlasst eine neue E-Mail zu erstellen, d. h. die entsprechende Befehlsfolgen auszuführen. Das Ereignis "Betreffzeile schreiben" veranlasst bei der Ausführung, dass der Cursor im Fenster der E-Mail auf die Betreffzeile springt und dort Eingaben möglich sind. Jedem weiteren Ereignis sind dem Ereignis entsprechende Befehlsfolgen zugeordnet, welche das E-Mail-System 1 nach der Aktivierung des Ereignisses ausführt.

Jedem dieser einzelnen Ereignisse sind Untergruppen mit Wörtern zugewiesen. Diese Untergruppen gliedern sich nach Substantiven und Verben bzw. zusätzlich Präfixe bzw. Präpositionen. Das Ereignis "Nachricht verfassen" weist beispielsweise eine Hauptgruppe und eine Untergruppe auf, die Hauptgruppe für Substantive und die Untergruppe für Verben. In den Gruppen sind jeweils Synonyme für die Worte angegeben, welche in der natürlich gesprochenen Sprache das jeweilige Ereignis verbal umschreiben und/oder beschreiben. Da in der natürlichen Sprache eine Anweisung in der Regel aus einem Substantiv und einem Verb besteht und hierdurch das Ereignis exakt und eindeutig zu bestimmen ist, werden diese Worte aus dem gesprochenen Satz, der Anweisung extrahiert und mit den Wörtern in den Gruppen verglichen.

In einer vorteilhaften besonders schnell auszuführenden Ausgestaltungsform der Erfindung werde nicht die ganzen Worte, sondern nur Wortstämme für die Analyse verwendet. Im folgenden Beispiel soll dies verdeutlicht werden. Ein Nutzer möchte eine E-Mail verfassen und spricht daher folgende Wortfolge in das E-Mail-System (1): "ich möchte eine Email verfassen".
Das Wort "Email" enthält den Wortstamm "Mail". Gleiches gilt für "verfassen" mit dem Wort "ver" und "fass". Mit den Wortstamm "fass" wird somit auch "erfassen", "abfassen" und "verfassen" registriert.

Im weiteren wird anhand einer beispielhaften Zusammenstellung von Befehlen des E-Mail-Systems 1 mit zugehörigen von Worten für die Hauptgruppen und Untergruppen die weitere Beschreibung konkretisiert.

Das E-Mail-System 1 weist folgende Befehle auf:
- neue Nachricht verfassen,
- Antwort verfassen,
- Adressieren an,
- Kennzeichnung.

Die einzelnen Gruppen weisen für das Ereignis "Nachricht verfassen" beispielsweise folgende Worte bzw. Wortstämme auf und sind in eine Hauptgruppe 1 und zwei Untergruppen 1 und 1.1 unterteilt. Die Hauptgruppe 1 enthält die Substantive, die Untergruppe 1 die Verben und die Untergruppe 1.1 die Präfixe, wie folgt:

### Neue Nachricht verfassen

| **Hauptgruppe 1** | **Untergruppe 1** | **Untergruppe 1.1** |
|---|---|---|
| Ankündigung | handel | ab |
| Auskunft | fertig | an |
| Nachricht | diktier | er |
| Bekanntmachung | arbeit | ver |
| Benachrichtigung | stell | über |
| Bescheid | fass | mit |
| Einladung | formulier | zu |
| Information | geb | |
| Mail | mach | |
| Meldung | maile | |
| Mitteilung | teil | |
| Neuigkeit | schreib | |
| Schreiben | sprech | |
| Schriftstück | mittel | |

Die einzelnen Gruppen weisen für das Ereignis "Antwort verfassen" beispielsweise folgende Worte bzw. Wortstämme auf und sind in eine Hauptgruppe 2 und eine Untergruppen 2 erfasst. Die Hauptgruppe 2 enthält wiederum die Substantive, die Untergruppe 2 die Verben, wie folgt:

### Antwort verfassen

| **Hauptgruppe 2** | **Untergruppe 2** | **Untergruppe 2.1** |
|---|---|---|
| Antwort | antworten | zurück |
| Erwiderung | entgegnen | |
| Gegenrede | zurückgeben | |
| Rückäußerung | | |

Die einzelnen Gruppen weisen für das Ereignis "Adressieren an" beispielsweise folgende Worte bzw. Wortstämme auf und sind in eine Hauptgruppe 3 und eine Untergruppen 3 erfasst. Die Hauptgruppe 3 enthält wiederum die Substantive, die Untergruppe 3 die Verben, wie folgt:

### Adressieren an

| **Hauptgruppe 3** | **Untergruppe 3** |
|---|---|
| Adressat | adressieren |
| Adresse | heißen |
| Anschrift | lauten |
| Empfänger | sein |
| Rezipient | ist |
| Verbinden | |

Die weiteren einzelnen Gruppen für das Ereignis "Kennzeichnung" weisen beispielsweise folgende Worte bzw. Wortstämme auf und sind in eine Hauptgruppe 4 und eine Untergruppen 4 erfasst. Die Hauptgruppe 4 enthält wiederum die Substantive, die Untergruppe 4 die Verben, wie folgt:

### Kennzeichnung

| **Hauptgruppe 4** | **Untergruppe 4** |
|---|---|
| Angabe | merk |
| Anmerkung | ordne |
| Anordnung | kennzeichnen |
| Anweisung | |
| Anzeichen | |
| Bemerkung | |
| Bescheid | |
| Bezeichnung | |
| Hinweis | |
| Kennzeichen | |
| Notiz | |
| Vermerk | |
| Vorzeichen | |

Es wird nun eine Hierarchieprüfung wie folgt durchgeführt:

### Hierarchieüberprüfung

### neue Mail erstellen

Hauptgruppe 1 + Untergruppe 1
Hauptgruppe 1 + Untergruppe 1 + Untergruppe 1.1

### Mail beantworten

Hauptgruppe 2 + Untergruppe 1
Hauptgruppe 2 + Untergruppe 1 + Untergruppe 1.1
Hauptgruppe 1 + Untergruppe 2
Hauptgruppe 1 + Untergruppe 1.1 + Untergruppe 2.1

### Adressieren an

Hauptgruppe 3 + Untergruppe 3 + Untergruppe 1.1
Hauptgruppe 3 + Untergruppe 1
Hauptgruppe 3 + Untergruppe 1 + Untergruppe 1.1

### Kennzeichnung

Hauptgruppe 4 + Untergruppe 5
Hauptgruppe 4 + Untergruppe 5 + Untergruppe 1.1
Hauptgruppe 4 + Untergruppe 3
Hauptgruppe 4 + Untergruppe 1
Hauptgruppe 4 + Untergruppe 1 + Untergruppe 1.1

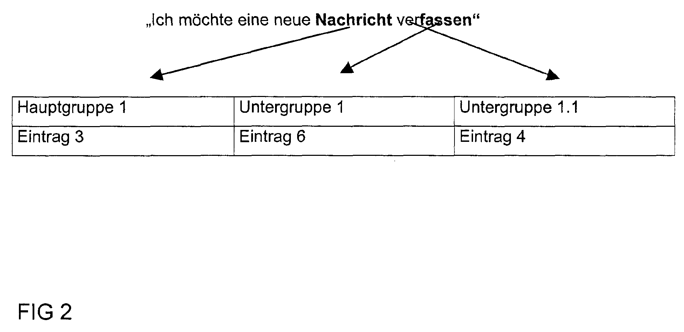

Im folgenden soll die Methode nochmals verdeutlicht werden, wobei in FIG 2 die schematische Funktionsweise dargestellt ist.
Der Nutzer sagt: "Ich möchte eine neue **Nachricht** ver**fassen".** Das E-Mail-System 1 erfasst diese Spracheeingabe über die Spracheingabeeinheit 2 und speichert diese in der Speichereinheit 4 zwischen. Anschließend wird diese Spracheingabe von der Sprachanalyseeinheit 3 analysiert und transkribiert und die transkribierte Eingabe wiederum in der Speichereinheit 4 gespeichert. Anschließend führt das E-Mail-System 1 die erfindungsgemäße Analyse durch, wie folgt.
Die Analyse nach Substantiven, Verben und Präfixe bzw. Präpositionen ergibt das Substantiv "Nachricht", das Verb "fassen" und das Präfix "ver". Ein Vergleich mit den Worten der Gruppen der jeweiligen Befehle ergibt eine Übereinstimmung mit dem dritten Eintrag der Hauptgruppe 1, dem sechsten Eintrag der Untergruppe 1 und dem vierten Eintrag der Untergruppe 1.1. Nach der Hierarchieprüfung ergibt sich eine eindeutige Zuweisung zum Ereignis bzw. Befehl "neue Nachricht verfassen". Die Ausführungseinheit (5) führt dann diesen Befehl aus.

Für sämtliche weitere Ereignisse sind ebenfalls, in vergleichbarer Weise, die beispielhaft aufgezeigten Haupt- und Unterwortgruppen definiert.

Um das Verfahren nochmals zu verdeutlichen, wird anhand eines konkreten Beispiels das Verfahren im weiteren nochmals beschrieben.

Ein Nutzer möchte zunächst eine neue Mail erstellen und anschließend die selbige absenden. Hierzu muss er zunächst das System dazu bringen, eine neue Mail aufzurufen und anschließend, nachdem er die Mail beendet hat, selbige abzusenden. Da das System frei und flexibel ist, gibt der Benutzer nunmehr folgender Wortfolge ein: "lieber Computer, ich möchte eine neue Mail verfassen."

In einer vorteilhaften besonders schnell auszuführenden Ausgestaltungsform der Erfindung wird vor der weiteren Analyse der erkannten Worte, eine Vordurchsuchung vorgenommen. Hierbei werden nur Substantive, Wortstämme der Verben und Präfixe bzw. Präpositionen weiterverarbeitet, alle anderen Worte werden gelöscht. Folglich bleiben folgende Wörter nach dieser Vor-Analyse für die Weiterverarbeitung übrig: " Mail ", "ver" "fass". Dabei der weiteren Analysen nunmehr weniger Worte zu untersuchen sind, ist dieses Verfahren besonders schnell.

Es wird zunächst jedes Wort nacheinander aus der Hauptgruppe 1 mit der Wortfolge verglichen. Wird eine Übereinstimmung eines Wortes aus der Hauptgruppe 1 mit der Wortfolge festgestellt, wird eine weitere Suche in den Hauptgruppen sofort beendet und es beginnt der Vergleich der zugehörenden Untergruppen mit der Wortfolge. Kommt es auch bei diesem Vergleich zu einer Übereinstimmung, startet das System die Hierarchieüberprüfung. Die Hierarchieüberprüfung ist eine Logikanalyse, die solange durchgeführt wird bis einer Logikabfolge einer auszuführenden Aktion eindeutig zugewiesen werden kann. Wird keine Übereinstimmung der Hauptgruppe 1 mit der Wortfolge festgestellt, so werden die Worte der Hauptgruppe 2 nacheinander mit der Wortfolge verglichen. Wird in keinen der Hauptgruppen eine Übereinstimmung festgestellt, besteht auch keine Notwendigkeit einer weiteren Suche in den Untergruppen zu starten. Es erfolgt keine Ausführung einer Aktion.

In einer vorteilhaften Ausgestaltung der Erfindung wird, sobald eine Untergruppe eines Ereignisses in oben beschriebener Weise markiert wird, bei Findung einer Übereinstimmung, die Suche und der Vergleich in den Unterwortgruppen dieses Ereignisses beendet und der verfahrensgemäß zum Vergleich der Unterwortgruppen des nächsten Ereignisses übergegangen. Hierdurch wird eine Beschleunigung der Suche erreicht.

In einer weiteren vorteilhaften Ausgestaltung der Erfindung analysiert das System vorab den transkribierten Satz nach Substantiven (Hauptgruppen) und Verben (Untergruppen). Zugeordnete Substantive (Hauptgruppen) werden anschließend nur noch mit den Untergruppen der Ereignisse verglichen. Verben (Untergruppen) werden nur noch mit Unterwortgruppen der Ereignisse verglichen. Hierdurch erfolgt wiederum eine Beschleunigung des Suchvorgangs.

Im weiteren wir die Vorgehensweise nochmals anhand eines weiteren angegebenen Satzes dargestellt. Ein Nutzer möchte eine Mail adressieren. Hierzu muss der Befehl "adressieren an " vom System ausgeführt werden. Um dies zu erkennen, muss, zur Eindeutigkeit, sowohl eines der Substantive (Hauptgruppen) als auch eines der Verben (Untergruppen) der Unterwortgruppen im Satz als Übereinstimmung gefunden werden. Um eine eindeutige Zuweisung zu erreichen, muss aber auch eine Präpositionen (Untergruppe 3), wie " an ", " mit ", " zu " vorliegen. Ansonsten ist die Anweisung nicht eindeutig. Dies wird anhand folgenden Beispiels klar. Ein Anwender gibt sprachlich folgende Anweisung ein: "adressieren an den Adressaten ". Bei der Durchsuchung der einzelnen Wortgruppen zu den jeweiligen Ereignissen werden die Unterwortgruppen zum Ereignis " adressieren an " Übereinstimmungen aufweisen und der Befehl wird ausgeführt.

In einer weiteren vorteilhaften Ausgestaltung der Erfindung wird bei der Umsetzung des Verfahrens der aktuelle Systemzustand des Email-Systems mit ihm die Erkennung des Ereignisses eingebunden. Hierdurch ist es möglich, alleinig durch ein Wort das System zur Ausführung eines Ereignisses zu bringen. Befindet sich das System beispielsweise in einer geöffneten Mail, welcher ein Nutzer gerade schreibt und/oder beendet und möchte der Nutzer dieser absenden, so wird er nicht den kompletten Satz " diesen Mail absenden " sprechen, vielmehr wird er nur " absenden " sagen. Berücksichtigt das System den Systemzustand nicht, so wird kein Ereignis ausgelöst, da in den Unterwortgruppen jeweils nur eine Übereinstimmung vorliegt. In der weiteren Unterwortgruppe, welche jedem Ereignis mindestens zugeordnet ist, liegt keine Übereinstimmung vor.

Wenn aber das System vorab den Systemzustand mit überprüft, wird es logischerweise erkennen, das aktuell eine Mail bereits geschrieben ist und wird die entsprechenden Unterwortgruppen der jeweiligen Ereignisse markieren. Somit ist es möglich, eines durch die Eingabe des Steuerwortes " absenden " das System zu starten, denn es wird unter dem Ereignis " Mail versenden " bereits die Unterwortgruppe der Substantive (Hauptgruppe) als markiert Kennzeichen und anschließend bei Durchsuchung der Unterwortgruppen der Verben (Untergruppen) bei diesem Ereignis ebenfalls eine Übereinstimmung feststellen und das Ereignis ausführen. Die Mail wird versendet.

## Patentansprüche

1. Verfahren zur Steuerung eines Systems durch eine Spracheingabe mit Zuweisung eindeutiger Ereignisse, welche von einem System ausführbar sind, mit folgenden Schritten:
- Eingabe der Sprache,
- Durchführung einer Spracherkennung und Durchführung einer Transkription der eingegebenen Sprache,
- Durchführung einer Logikanalyse der transkribierten Spracheingabe, wobei jeder der transkribierten Wortteile der Spracheingabe mit abgespeicherten Mustern verglichen wird,
- Zuweisung eines eindeutigen Ereignisses als Ergebnis der Logikanalyse,
- Veranlassung des Systems das eindeutige Ereignis auszuführen,
**dadurch gekennzeichnet, dass**
jedem Ereignis mindestens eine Hauptwortgruppe und mindestens eine Unterwortgruppe mit Vergleichsmustern zugeordnet ist, mittels welcher die einzelnen transkribierten Wörter der Spracheingabe verglichen werden.

2. Verfahren nach Anspruch 1,
**dadurch gekennzeichnet, dass**
die Spracherkennung nach dem Bigramm- und Trigrammverfahren durchgeführt wird.

3. Verfahren nach Anspruch 1 oder 2,
**dadurch gekennzeichnet, dass**
die Spracheingabe in natürlicher Sprache erfolgt.

4. Verfahren nach Anspruch 1,
**dadurch gekennzeichnet, dass**
die Vergleichmuster Worte und/oder Wortstämme sind.

5. Verfahren nach einem oder mehreren der vorangegangenen Ansprüche,
**dadurch gekennzeichnet, dass**
der Hauptgruppe Substantive und den Untergruppen Verben und Präfixe bzw. Präpositionen zugeordnet werden.

6. Verfahren nach einem oder mehreren der vorangegangenen Ansprüche,
**dadurch gekennzeichnet, dass**
über eine Übereinstimmung eines transkribierten Wortes mit jeweils einem Musters aus jeder dem Ereignis zugeordneten Haupt- und Untergruppe eine eindeutige Zuweisung des Ereignisses definiert wird.

7. Verfahren zur Logikanalyse einer gesprochenen Wortfolge und deren eindeutigen Zuweisung zu einem Ereignis, wobei jedem Ereignis Unterwortgruppen, gegliedert nach mindestens einer Hauptgruppe und mindestens einer Untergruppe, zugewiesen werden, und in diesen Unterwortgruppen logisch zugehörige Worte zusammengestellt sind, mit folgenden Schritten:
- Erfassung der gesprochenen Wortfolge,
- Transkription der Wortfolge,
- Vergleich der einzelnen Worte nach Vor-Analyse der transkribierten Wortfolge mit jedem Wort jeder Unterwortgruppe eines jeden Ereignisses,
- Markierung einer Unterwortgruppe eines Ereignisses bei Übereinstimmung eines Wortes der transkribierten Wortfolge mit einem Wort dieser Unterwortgruppe und
- eindeutige Zuordnung der transkribierten Wortfolge zu einem Ereignis, sobald eine Markierung aller Unterwortgruppen eines Ereignisses erfolgt und eine vordefinierte Hierarchieüberprüfung der markierten Ereignisse durchgeführt wird.

8. Verfahren zur Logikanalyse nach Anspruch 7,
**dadurch gekennzeichnet, dass**
in den Hauptgruppen Substantiven, und in den Untergruppen Verben und Präfixe bzw. Präpositionen gruppiert werden.

9. Verfahren zur Logikanalyse nach Anspruch 7 oder 8,
**dadurch gekennzeichnet, dass**
ein Vergleich eines jeden Wortes der gesprochenen Wortfolge mit jedem Wort der Haupt- und Untergruppen eines jeden Ereignisse verglichen werden und bei Übereinstimmung diese Gruppen und das zugehörige Ereignis markiert werden.

10. Verfahren zur Logikanalyse nach einem oder mehreren der vorangegangenen Ansprüche,
**dadurch gekennzeichnet, dass**
die transkribierten Wortfolge vor der Durchführung der Logikanalyse von Füllworten befreit wird.

11. Verfahren zur Logikanalyse nach Anspruch 10,
**dadurch gekennzeichnet, dass**
die Füllworte Artikel, Adverbien und Partikel sind.

12. System (1) zur Durchführung der Verfahrens nach einem oder mehreren der vorangegangenen Ansprüche bestehend aus einer Spracheingebeeinheit (2), einer Sprachanalyseeinheit (3), einer Speichereinheit (4) und einer Ausführungseinheit (5).

13. System (1) nach Anspruch 12,
**dadurch gekennzeichnet, dass**
das System (1) ein Computersystem ist.
